# EUROPEAN PATENT SPECIFICATION

(11) **EP 2 094 022 B1**
(45) Date of publication and mention of the grant of the patent: **21.04.2010**
(21) Application number: 08300108.1
(22) Date of filing: 22.02.2008
(51) Int. Cl.: H04Q 3/68, H04L 12/56

(54) **Method for accessing a plurality of fabric switches**
Verfahren für den Zugriff auf mehrere Koppelfelder
Procédé d'accès à plusieurs commutateurs matriciels

(43) Date of publication of application: 26.08.2009
(73) Proprietor: Alcatel Lucent, 75008 Paris (FR)
(72) Inventor: Gemelli, Riccardo, 20019, Settimo M. se (IT); Badalucco, Giuseppe, 23035, Lissone (IT); Ronchetti, Luigi, 22100, Como (IT); Cucchi, Silvio, 20083, Gaggiano (Milano) (IT); Costantini, Carlo, 22064, Casatenovo (Lecco) (IT)
(74) Representative: Menzietti, Domenico

(56) References cited:
- EP-A- 1 202 597
- WO-A-94/27391

## Description

### FIELD OF THE INVENTION

The present invention relates to the telecommunication field and more in particular to a method for performing the switching of digital signals. Still more in particular, the invention concerns a method for accessing a plurality of fabric switches.

### BACKGROUND OF THE INVENTION

Several solutions are known in the art for the problem of performing a switching function for cross-connections between a plurality of inputs and a plurality of outputs, in case a single switching matrix (also indicated with "fabric switch") performing the switching function is not feasible. According to the known solutions, the switching function is performed by using a plurality of smaller switching matrices, which are globally equivalent to a single switching matrix performing the switching function.

A first solution to the above problem is an architecture composed of multiple switching stages like the Clos architecture, which is composed of three stages and which has the advantage to require less crosspoints than a single switching matrix. Depending on the number of switching matrices of the second stage, the Clos architecture is re-arrangeably non-blocking (that is, an unused input can always be connected to an unused output, but the configured cross-connections must be re-arranged by assigning them to different crossbar switches of the second stage) or strictly non-blocking (an unused input can always be connected to an unused output, without rearranging the configured cross-connections).

A re-arrangeably non-blocking Clos architecture requires the reconfiguration of the existing cross-connections, which is time consuming: in case of requiring the configuration of a new cross-connection after a failure on a cross-connection, the time spent for the re-arrangement of the existing cross-connections and for the configuration of the new cross-connection is too high (for example, more than 2 ms) and this has the disadvantage that a lot of data carried over the failed cross-connection is lost during this time

A strictly non-blocking Clos architecture does not require the reconfiguration of the existing cross-connections, but it requires an high number of crossbar switches in the second stage, which has the disadvantage to be expensive and also not feasible.

Moreover, the Clos architecture has the disadvantage to require a coordination of the 3 stages and thus a complex control algorithm.

A second solution to the above problem is to perform a parallel switching (also indicated with "slicing"). A signal carried over an input is sliced into several parts (for example, every byte of the signal is divided into 8 bits) and the different parts (slices) of the signal are sent to different switching matrices. This is performed for every input and thus each switching matrix performs the cross-connection of one slice of all the inputs (in the example, every switching matrix requires a switching capacity of 1/8 of the capacity of the total switching function). This second solution is not feasible in case of a switching function including many inputs/ outputs, because it would require an high number of slices and thus an high number of parallel switching matrices.

A third solutions to the above problem is to split the flow received from each input into a number of flows equal to the number of the outputs, to send the splitted flows to corresponding buffers and each output can select the flow from any buffer. This third solution has the disadvantage to require an high number of buffers, equal to the number of inputs multiplied by the number of outputs.

### SUMMARY OF THE INVENTION

In view of the drawbacks of the known solutions, the main object of the present invention is to provide a method for performing a switching function for cross-connections between a plurality of inputs and a plurality of outputs by using a plurality of smaller fabric switches. This object is achieved by a method according to claim 1.
The basic idea is to generate a plurality of "logical" input flows from the inputs of the switching function, to arrange the "logical" input flows into a plurality of groups including a number of "logical" flows such that the plurality of groups can be switched by a plurality of fabric switches, and to select output logical flows from the switched flows.

Advantages of the invention are not to require the re-arrangement of the configured cross-connections in case of configuring a new cross-connection, to require less fabric switches respect to the Clos architecture and to require a less complex algorithm for controlling the switching system.

According to a first aspect, the present invention provides a method for switching digital signals. The method includes the steps of generating multiple input flows from multiple inputs, the number of the multiple input flows being higher than the number of the multiple inputs; arranging the multiple input flows into first multiple groups of flows taking into account the switching capacity of at least two fabric switches, the number of flows switched by each of the at least two fabric switches being smaller than the number of the multiple input flows; duplicating the first multiple groups of flows into at least one corresponding copy; arranging the first multiple groups and the at least one corresponding copy into second multiple groups of flows; switching flows of the second multiple groups into the at least two fabric switches; selecting multiple output flows from at least part of the switched flows of the second multiple groups.

Preferably, the first multiple groups and the copies are arranged into different second multiple groups.

Preferably, the arrangement into the second multiple groups is such that at least one second group includes a group out of the first multiple groups and the copy of another group out of the first multiple groups.

Preferably, the method further includes the step of dividing at least one of the second groups of flows into third multiple groups of flows and the step of slicing the flows of the third groups over the at least two fabric switches.

Preferably, at least two fabric switches are arranged into multiple switching planes and the switching of the second multiple groups is performed into different switching planes.

Preferably, the multiple inputs are multiple input ports and one group out of the first multiple groups includes the input flows generated from different input ports.

Preferably, one of the multiple switching planes includes a plurality of fabric switches and the method further includes the step of slicing the flows of a group out of the second multiple groups, wherein the step of switching the flows of the group includes the switching of the sliced flows over the plurality of fabric switches.

Preferably, the multiple inputs are multiple input ports and a first input line card is adapted to receive the first multiple input ports, wherein a matrix board includes the at least two fabric switches and an output line card is adapted to generate the multiple output ports.

Preferably, the step of duplicating is performed at the transmission side the first input line card.

Preferably, the step of selecting is performed at the reception side of the output line card.

Preferably, the step of duplicating is performed at the reception side of the matrix board and the step of selecting is performed at the transmission side of the matrix board.

Preferably, the step of arranging the multiple input flows further takes into account the capacity of links between the input line card and the matrix board.

Preferably, the method further includes the step of generating in the matrix board control information from configuration information indicating the cross-connections between the multiple input flows and the multiple output flows and the step of transmitting the control information from the matrix board to the output line card; receiving the control information at the output line card and performing therefrom the selection of the multiple output flows.

Preferably, the method further includes the step of generating other multiple input flows from other multiple inputs; the number of the other multiple input flows being higher than the number of the other multiple inputs; the step of arranging the other multiple input flows into other first multiple groups of flows taking into account the switching capacity of the at least two fabric switches; the step of duplicating the other first multiple groups of flows into at least one other corresponding copy; the step of arranging the other first multiple groups and the at least one other corresponding copy into other second multiple groups; switching flows of the other second multiple groups into the at least two fabric switches; and the step of selecting the multiple output flows from the at least part of the switched flows of the second multiple groups and from at least part of switched flows of the other second multiple groups.

According to a second aspect, the present invention provides a device to access at least two fabric switches for switching digital signals. The device includes first means for generating multiple input flows from multiple inputs, the number of the multiple input flows being higher than the number of the multiple inputs; for arranging the multiple input flows into first multiple groups of flows taking into account the switching capacity of at least two fabric switches, the number of flows switched by each of the at least two fabric switches being smaller than the number of the multiple input flows; for duplicating the first multiple groups of flows into at least one corresponding copy; and for arranging the first multiple groups and the at least one corresponding copy into second multiple groups of flows to be switched by the at least two fabric switches. The device further includes second means for selecting multiple output flows from flows switched by the at least two fabric switches.

Preferably, the multiple inputs are multiple input ports and a first input line card is adapted to receive the first multiple input ports.

According to a third aspect, the present invention provides a system for switching digital signals, the system including a device according to the second aspect and including the at least two fabric switches.

Preferably, the system includes a matrix board comprising the at least two fabric switches, wherein the first means further takes into account the capacity of links between the input line card and the matrix board.

Preferably, the system includes controlling means adapted to receive configuration information indicating the cross-connections between the multiple input flows and the multiple output flows and to generate therefrom-information for controlling the selecting means.

According to a fourth aspect, the present invention provides a network element including a system according to the third aspect.

According to a fifth aspect, the present invention provides a telecommunication network including at least one network element according to the fourth aspect.

According to a sixth aspect, the present invention provides a computer program comprising computer program code means adapted to perform the steps of the method according to the first aspect when said computer program is run on hardware of a network element.

### BRIEF DESCRIPTION OF THE DRAWINGS

Fig. 1 schematically shows a first embodiment of the invention.
Fig.2 schematically shows a second embodiment of the invention.
Fig.3 schematically shows a third embodiment of the invention.
Fig.4 schematically shows a fourth embodiment of the invention.
Fig.5 schematically shows the method for performing the selection in the first embodiment.
Fig.6 schematically shows a fifth embodiment of the invention.

### BEST MODE FOR CARRYING OUT THE INVENTION

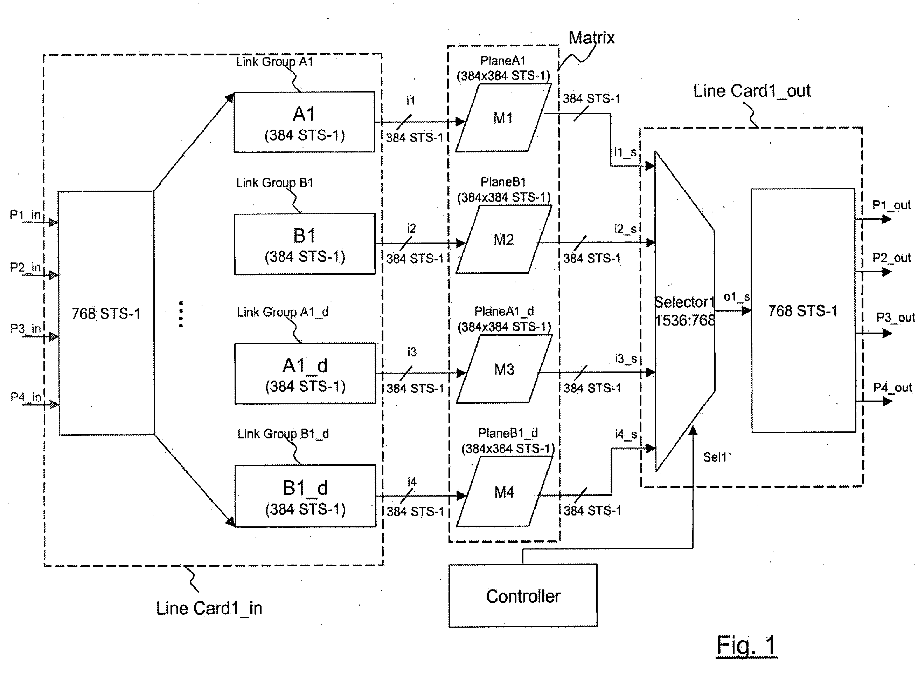

Referring to Fig.1, it shows a network element for a telecommunication network carrying digital signals according to time division multiplexing (TDM) and, more specifically, according to standard Sonet. The network element includes four input ports (indicated with P1_in, P2_in, P3_in, P4_in), an input line card (indicated with "Line Card1_in") connected to the input ports and a plurality of switching planes (indicated with "PlaneA1", "PlaneB1", "PlaneA1_d", "PlaneB1_d") for performing cross-connections of digital signals. Each input port is adapted to receive a digital signal having a bit rate of about 10 Gbit/s, which includes 192 STS-1 frames (or another multiplexed signal of the Sonet standard having a bit rate equivalent to the bit rate of 192 STS-1 frames), each STS-1 frame having a bit rate of about 52 Mbit/s, The input line card receives the signals from the input ports and generates therefrom a total of 768 STS-1 input flows (previously indicated with "logical" input flows), which are arranged into 2 first groups (indicated with "A1" and "B1"), each one including 384 STS-1 input flows: A1 includes STS-1 input flows from number 1 to number 384 and A2 includes STS-1 input flows from number 385 to number 768. The number of the input flows of each first group depends on the switching capacity of the switching planes PlaneA1, PlaneB1: each switching plane is able to switch 384 STS-1, the total input flows are 768 STS-1 and thus the input flows are arranged into 2 first groups, each one including 384 STS-1 input flows.

The first groups of flows are duplicated into corresponding copies: group A1 is duplicated into group indicated with A1_d and group B1 is duplicated into group indicated with B1_d, thus achieving 4 second groups of flows, indicated with "Link Group A1" including first group A1, "Link Group B1" including first group By, "Link Group A1_d" including first group A1_d, and "Link Group B1_d" including first group B1_d. Line Card1_in generates four outputs indicated with i1, i2, i3, i4: flows of Link Group A1 are carried over i1, flows of Link Group B1 are carried over i2, flows of Link Group A1_d are carried over i3 and flows of Link Group B1_d are carried over i4.

Preferably, the generation of the input flows, the arrangement into the first groups of flows, the duplication of the first groups of flows and the arrangement into the second group of flows is performed using one (or more than one) input memory and using means for controlling the write into the memory and the read from the memory.

The generation of the input flows, the arrangement into the first groups of flows, the duplication of the first groups of flows and the arrangement into the second group of flows of an input line card can be configured in advance, that is before the deployment of the network element in the telecommunication network; alternatevely, it can be configured run-time, that is after the network element is deployed in the network and is active, but before the activation of the input line card.

Each second group of flows is switched by a different switching plane: Link Group A1 is switched by PlaneA1, Link Group B1 is switched by PlaneB1, Link Group A1_d is switched by PlaneA1_d and Link Group B1_d is switched by PlaneB1_d.

According to the first embodiment of the invention, the network element further includes an output line card (indicated with "Line Card1_out") comprising selecting means (indicated with "Selector1"). The selecting means include 4 data inputs, one data output (indicated with o1_s) and one selector input (indicated with Sel1) for controlling the selection from the data inputs to the data output. The output line card further includes means for associating the data output of the selecting means to the output ports.

PlaneA1 generates output i1_s carrying 384 STS-1 switched flows and is connected to the first data input of Selector1 of Line Card1_out, PlaneB1 generates output i2_s carrying 384 STS-1 switched flows and is connected to the second data input of Selector1, PlaneA1_d generates output i3_s carrying 384 STS-1 switched flows and is connected to the third data input of Selector1, and PlaneB1_d generates output i4_s carrying 384 STS-1 switched flows and is connected to the fourth data input of Selector1.

Therefore Selector1 is adapted to receive a total of 1536 STS-1 flows and to select therefrom 768 STS-1 output flows carried over the output o1_s of the selecting means. The selection is controlled by control information over the control input Sel1, which is driven by a controller (for example, a microprocessor), calculating the control information from configuration information indicating the cross-connections between STS-1 signals of an input port of the input line card and STS-1 signals of an output port of the output line card.

The network element further includes 4 output ports (indicated with P1_out, P2_out, P3_out and P4_out) connected to the output line card Line Card1_out. The selected 768 STS-1 output flows are associated to the 4 output ports: for example, output port P1_out includes the selected output flows from number 1 to number 192, output port P2_out includes the selected output flows from number 193 to number 384, output port P3_out includes the selected output flows from number 385 to number 576, output port P4_out includes the selected output flows from number 577 to number 768.

Each output port is adapted to transmit a digital signal having a bit rate of about 10 Gbit/s, which includes 192 STS-1 frames (or another multiplexed signal of the Sonet standard having a bit rate equivalent to the bit rate of 192 STS-1 frames).

Fig.1 shows i1 from Link Group A1 to PlaneA1 and carrying 384 STS-1 signals, wherein i1 is only a logical indication, that is i1 can be 384 links (each link carrying one STS-1 signal) between Link Group A1 and Planet1 (thus between Line Card1_in and the Matrix) or can be less than 384 links (each link carrying more than one STS-1 signal) or more than 384 links. Similar considerations apply to i2 from Link Group B1 to PlaneB1, to i3 from Link Group A1_d to PlaneA1_d and to i4 from Link Group B1_d to PlaneB1_d. Similar considerations also apply to i1_s from PlaneA1 to Line Card1_out, to i2_s from PlaneB1 to Line Card1_out, to i3_s from PlaneA1_d to Line Card1_out and to i4_s from PlaneB1_d to Line Card1_out.

Therefore according to the first embodiment, the invention allows to perform a switching function for cross-connection of 768 STS-1 flows by using 4 switching planes, each one having a smaller switching capacity of 384 STS-1 flows.

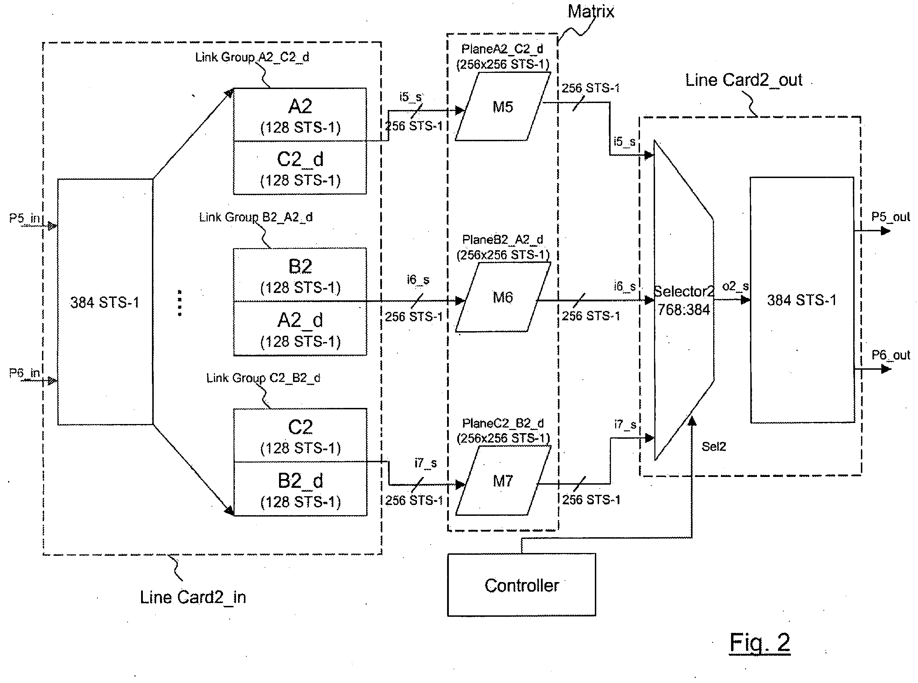

Referring to Fig.2, it shows a network element according to a second embodiment of the invention. The network element includes 2 input ports (indicated with P5_in and P6_in), an input line card (indicated with "Line Card2_in") connected to the input ports and a plurality of switching planes (indicated with "RlaneA2_C2_d", "PlaneB2_A2_d" and "PlaneC2_B2_d") for performing the cross-connections of digital signals. Each input port is adapted to receive a digital signal having a bit rate of about 10 Gbit/s, which includes 192 STS-1 frames (or another multiplexed signal of the Sonet standard having a bit rate equivalent to the bit rate of 192 STS-1 frames). The input line card receives the signals from the input ports and generates therefrom a total of 384 STS-1 input flows (also indicated with "logical" input flows), which are arranged into 3 first groups (indicated with "A2", "B2" and "C2"), each one including 128 STS-1 input flows: A2 includes STS-1 input flows from number 1 to number 128, B2 includes STS-1 input flows from number 129 to number 256 and C2 includes STS-1 input flows from number 257 to number 384. The number of the input flows of each first group depends on the switching capacity of the switching planes PlaneA2_C2_d, PlaneB2_A2_d and PlaneC2_B2_d: each switching plane is able to crossconnect 256 STS-1, the total input flows are 384 STS-1 and thus the input flows are arranged into a plurality of first groups such that each first group can be switched by one switching plane: in this second embodiment, the input flows are arranged into 3 first groups, each one including 128 STS-1 input flows, which can be switched by one switching plane able to crossconnect 256 STS-1.

It is worth noting that the first group B2 includes input flows generated from different input ports, because it includes 64 input flows from input port P5_in and 64 input flows from input port P6_in.

The first groups of flows are duplicated into corresponding copies: group A2 is duplicated into group indicated with A2_d, group B2 is duplicated into group indicated with B2_d and group C2 is duplicated into group indicated with C2_d, thus achieving 6 groups of flows.

The first groups of flows and the corresponding copies are arranged into 3 second groups of flows, indicated with "Link Group A2_C2_d", "Link Group B2_A2_d" and "Link Group C2_B2_d", according to the following rules:
- Link Group A2_C2_d includes A2 and C2_d;
- Link Group B2_A2_d includes B2 and A2_d;
- Link Group C2_B2_d includes C2 and B2_d.

Preferably, the generation of the input flows, the arrangement into the first groups of flows, the duplication of the first groups of flows and the arrangement into the second group of flows is performed using one (or more than one) input memory and using means for controlling the write into the memory and the read from the memory.

Each second group of flows is switched by a different switching plane: Link Group A2_C2_d is switched by PlaneA2_C2_d, Link Group B2_A2_d is switched by PlaneB2_A2_d and Link Group C2_B2_dis switched by PlaneC2_B2_d

According to the second embodiment of the invention, the network element further includes an output line card (indicated with "Line Card2_out") comprising selecting means (indicated with "Selector2"). The selecting means include 3 data inputs, one data output (indicated with o2_s) and one selector input (indicated with Sel2) for controlling the selection from the data inputs to the data output. The output line card further includes means for associating the data output of the selecting means to the output ports.

PlaneA2_C2_d generates output i5_s carrying 384 STS-1 switched flows and is connected to the first data input of Selector2 of Line Card2_out, PlaneB2_A2_d generates output i6_s carrying 384 STS-1 switched flows and is connected to the second data input of Selector2, and PlaneC2_B2_d generates output i7_s carrying 384 STS-1 switched flows and is connected to the third data input of Selector2.

Therefore Selector2 is adapted to receive a total of 768 STS-1 flaws and to select therefrom 384 STS-1 output flows carried over the output o2_s of the selecting means. The selection is controlled by control information over the control input Sel2, which is driven by a controller, calculating the control information from configuration information indicating the cross-connections between STS-1 signals of an input port of the input line card and STS-1 signals of an output port of the output line card.

The network element further includes 2 output ports (indicated with P5_out and P6_out) connected to the output line card Line Card2_out. The selected 384 STS-1 output flows are associated to the 2 output ports: for example, output port P5_out includes the selected output flows from number 1 to number 192, and output port P2_out includes the selected output flows from number 193 to number 384.

Each output port is adapted to transmit a digital signal having a bit rate of abort 10 Gbit/s, which includes 192 STS-1 frames (or another multiplexed signal of the Sonet standard having a bit rate equivalent to the bit rate of 192 STS-1 frames).

Therefore according to the second embodiment, the invention allows to perform a switching function for cross-connection of 384 STS-1 flows by using 3 switching planes, each one having a smaller cross-connection capability of 256 STS-1 flows.

Fig.1 and Fig.2 show a plurality of switching planes, wherein each switching plane can include one fabric switch for performing the cross-connections (384 STS-1 in the first embodiment or 256 STS-1 in the second embodiment) of the switching plane: this is shown in Fig.1 wherein PlaneA1 includes one fabric switch indicated with "M1", PlaneB1 includes one fabric switch indicated with "M2", PlaneA1_d includes one fabric switch indicated with "M3" and PlaneB1_d includes one fabric switch indicated with "M4", and it's shown in Fig.2 wherein PlaneA2_C2_d includes one fabric switch indicated with "M5", PlaneB2_A2_d includes one fabric switch indicated with "M6" and PlaneC2_B2_d includes one fabric switch indicated with "M7". Alternatevely, each switching plane can include more than one fabric switch for performing the cross-connections, that is M1 ... M7 indicates a logical switching function (and not a physical fabric switch) which is implemented over a plurality of fabric switches.

Preferably, the switching function of one switching plane is performed over a plurality of fabric switches according to slicing of the flows of the second groups. For example, PlaneA1 of the first embodiment performs the cross-connection of 384 STS-1 flows of Link Group A1 by slicing the 384 STS-1 flows over 4 fabric switches, each one for cross-connecting 2 bits of every byte of all the 384 STS-1 flows. Similar considerations apply to PlaneB1 for Link Group B1, to PlaneA1_d for Link Group A1_d and to PlaneB1_d for Link Group B1_d. Another example is PlaneA2_C2_d of the second embodiment performing the cross-connection of 256 STS-1 flows of Link Group A2_C2_d by slicing the 256 STS-1 flows over 3 fabric switches, each one for cross-connecting 1/3 of the bandwidth of all the 256 STS-1 flows. Similar considerations apply to PlaneB2_A2_d for Link Group B2_A2_d and to PlaneC2_B2_d for Link Group C2_B2_d.

Moreover, the plurality of switching planes can be implemented through different matrix boards or through the same matrix board (like shown in Fig.1 and Fig.2).

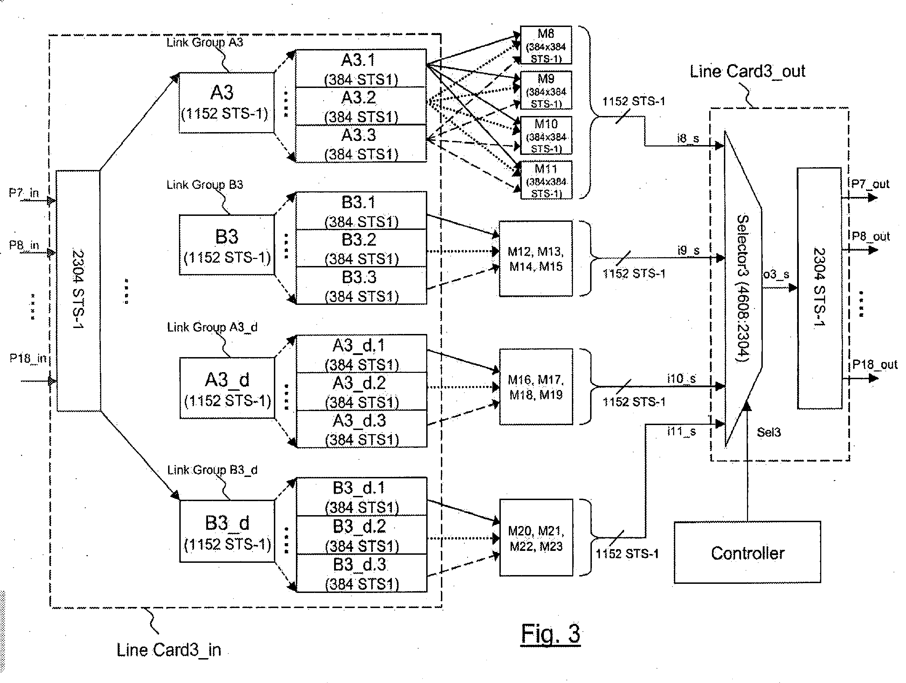

Referring to Fig.3, it shows a network element according to a third embodiment of the invention. The network element includes twelve input ports (indicated with P7_in, P8_in, .... P18_in), an input line card (indicated with "Line Card3_in") connected to the input ports and a plurality of fabric switches (indicated with M8, M9, ... M23) for performing the cross-connections. Each input port is adapted to receive a digital signal having a bit rate of about 10 Gbit/s, which includes 192 STS-1 frames (or another multiplexed signal of the Sonet standard having a bit rate equivalent to the bit rate of 192 STS-1 frames), each STS-1 frame having a bit rate of about 52 Mbit/s. The input line card receives the signals from the input ports and generates therefrom a total of 2304 STS-1 input flows (also indicated with "logical" input flows), which are arranged into 2 first groups (indicated with "A3" and "B3"), each one including 1152 STS-1 input flows: A3 includes STS-1 input flows from number 1 to number 1152 and B3 includes STS-1 input flows from number 1153 to number 2304.

The first groups of flows are duplicated into corresponding copies: group A3 is duplicated into group indicated with A3_d and group B3 is duplicated into group indicated with B3_d, thus achieving 4 second groups of flows, indicated with "Link Group A3" including first group A3, "Link Group B3" including first group B3, "Link Group A3_d" including first group A3_d, and "Link Group B3_d" including first group B3_d.

Each second group of flows includes 1152 STS-1 flows which can't be switched by one of the fabric switches, which are adapted to switch 384 STS-1 flows. Therefore each second group is further divided into three third groups of flows, each third group including 384 flows. Specifically:
- Link Group A3 is divided into the following third groups: A3.1 including flows from number 1 to number 384, A3.2 including flows from number 385 to number 768, A3.3 including flows from number 769 to number 1152;
- Link Group B3 is divided into the following third groups: B3.1 including flows from number 1153 to number 1536, B3.2 including flows from number 1537 to number 1920, B3.3 including flows from number 1921, to number 2304;
- Link Group A3_d is divided into the following third groups: A3_d.1 including flows from number 2305 to number 2688, A3_d.2 including flows from number 2689 to number 3072, A3_d.3 including flows from number 3073 to number 3456;
- Link Group B3_d is divided into the following third groups: B3_d.1 including flows from number 3457 to number 3840, B3_d.2 including flows from number 3841 to number 4224 B3_d.3 including flows from number 4225 to number 4608.

Each third group is cross-connected over 4 fabric switches according to the slicing of the flows. Referring specifically to A3.1, each flow is divided into 4 slices: the first slice is cross-connected by fabric switch M8, the second slice is cross-connected by fabric switch M9, the third slice is cross-connected by fabric switch M10 and the fourth slice is cross-connected by fabric switch M11. This is indicated in Fig.3 with continuous arrows from A3.1 to M8, M9, M10 and M11.

Similar considerations apply to A3.2 and A3.3, wherein the slicing is indicated in Fig.3 with arrows having a dotted and broken line respectively.

Similar consideration also apply to:
- B3.1, B3.2 and B3.3, which are cross-connected according to slicing over fabric switches M 12, M13, M14 and M 15;
- A3_d.1, A3_d.2 and A3_d.3, which are cross-connected according to slicing over fabric switches M16, M17, M18 and M19;
- B3_d.1, B3_d.2 and B3_d.3, which are cross-connected according to slicing over fabric switches M20, M21, M22 and M23.

According to the third embodiment of the invention, the network element further includes an output line card (indicated with "Line Card3_out") comprising selecting means (indicated with "Selector3"). The selecting means include 3 data inputs (indicated with i8_s, i9_s, i10_s, i11_s), one data output (indicated with o3_s) and one selector input (indicated with Sel3) for controlling the selection from the data inputs to the data output. The output line card further includes means for associating the data output of the selecting means to the output ports.

The first input i8_s is adapted to receive 1152 STS-1 flows switched by fabric switches M8, M9, M10, M11, the second input i9_s is adapted to receive 1152 STS-1 flows switched by fabric switches M12, M13, M 14, M15, the third input i10_s is adapted to receive 1152 STS-1 flows switched by fabric switches M16, M17, M18, M19 and the fourth input i11_s is adapted to receive 1152 STS-1 flow switched by fabric switches M20, M21, M22, M23.

The selecting means are adapted to receive a total of 4608 STS-1 flows and to select therefrom 2304 STS-1 output flows carried over the output o3_s of the selecting means. The selection is controlled by control information over the control input Sel3, which is driven by a controller, calculating the control information from configuration information indicating the cross-connections between STS-1 signals of an input port of the input line card and STS-1 signals of an output port of the output line card.

The network element further includes 12 output ports (indicated with P7_out, P8_out, ... P18_out) connected to the output line card Line Card3_out. The selected 2304 STS-1 output flows are associated to the 12 output ports, each one adapted to transmit a digital signal having a bit rate of about 10 Gbit/s, which includes 192 STS-1 frames (or another multiplexed signal of the Sonet standard having a bit rate equivalent to the bit rate of 192 STS-1 frames).

Therefore according to the third embodiment, the invention allows to perform a switching function for cross-connection of 2304 STS-1 flows by using 16 fabric switches, each one having a smaller switching capacity of 384 STS-1 flows.

Comparing the first and the third embodiments each other, the third embodiment allows to perform a switching function (2304 x 2304 STS-1) higher than in the first embodiment (768 x 768 STS-1), by using smaller fabric switches of the same switching capacity (384 x 384 STS-1).

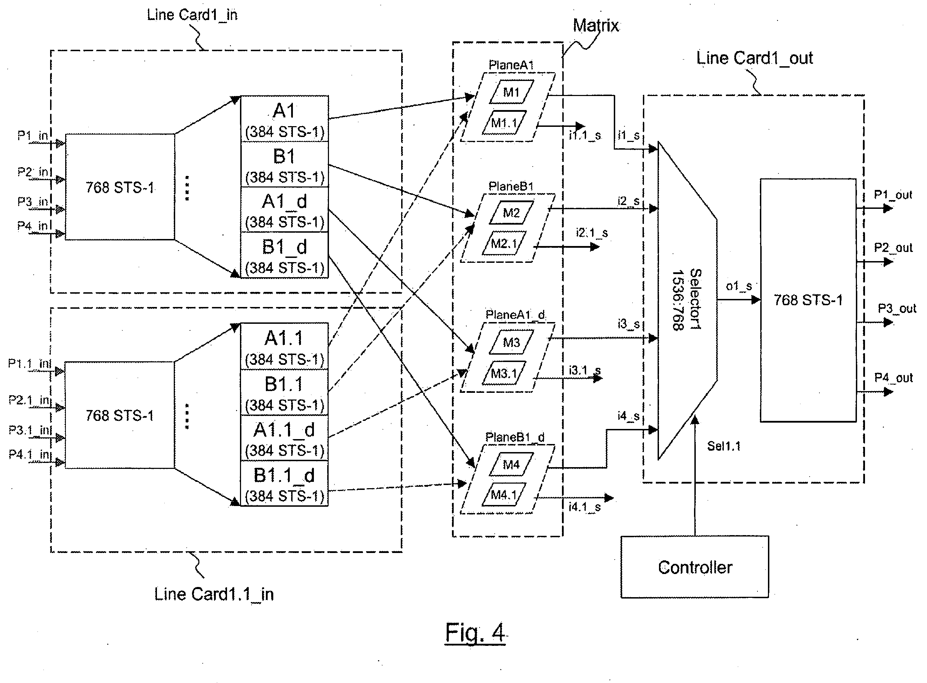

Referring to Fig.4, it shows a network element according to a fourth embodiment of the invention, which is a modification of the first embodiment. In fact, Fig.4 shows a network element including the input line card "Line Card1_in" of the first embodiment and further including another input line card (indicated with "Line Card1.1_in"). According to the fourth embodiment, other first and second group of flows are generated from the input flows received at the other Line Card1.1_in, like explained for the input flows received at Line Card1 of the first embodiment. The other second group of flows generated from Line Card1.1_in are switched by the switching planes PlaneA1, PlaneB1, PlaneA1_d and PlaneB1_d, like explained for the second group of flows generated from Line Card1_in of the first embodiment.

PlaneA1 generates output i1_s carrying 384 STS-1 switched flows and is connected to the first input of Selector1 of Line Card1_out, wherein the 384 STS-1 switched flows can come both from the STS-1 signals of Link Group A1 of Line Card1_in and from the STS-1 signals of Link Group A1 of Line Card1.1_in. PlaneB1 generates output i2_s carrying 384 STS-1 switched flows and is connected to the second input of Selector1, wherein the 384 STS-1 switched flows can come both from the STS-1 signals of Link Group B1 of Line Card1_in and from the STS-1 signals of Link Group B1 of Line Card1.1_in. PlaneA1_d generates output i3_s carrying 384 STS-1 switched flows and is connected to the third input of Selector1, wherein the 384 STS-1 flows can come both from the STS-1 signals of Link Group A1_d of Line Card1_in and from the STS-1 signals of Link Group A1_d of Line Card1.1_in, PlaneB1_d generates output i4_s carrying 384 STS-1 switched flows and is connected to the fourth input of Selector1, wherein the 384 STS-1 flows can come both from the STS-1 signals of Link Group B1_d of Line Card1_in and from the STS-1 signals of Link Group B1_d of Line Card1.1_in.

PlaneA1 further generates output i1.1_s carrying 384. STS-1 switched flows and is connected to the first input of the selector of another output line card (not shown in Fig.4). PlaneB1 further generates output i2.1_s carrying 384 STS-1 switched flows and is connected to the second input of the selector of the other output line card. PlaneA1_d further generates output i3.1_s carrying 384 STS-1 switched flows and is connected to the third input of the selector of the other output line card. PlaneB1_d further generates output i4.1_s carrying 384 STS-1 switched flows and is connected to the fourth input of the selector of the other output line card.

Selector1 is adapted to receive a total of 1536 STS-1 flows and to select therefrom 768 STS-1 output flows carried over the output o1_s of the selecting means. The selection is controlled by control information over the control input Sel1.1 which is driven by a controller, calculating the control information from configuration information indicating the cross-connections between STS-1 signals of an input port of the input line cards and STS-1 signals of an output port of the output line card.

Finally, the selected 768 STS-1 output flows are associated to the 4 output ports.

Therefore according to the fourth embodiment, it's possible to perform cross-connections between signals received at two input line cards and signals generated from one output line card.

More in general, the switching planes PlaneA1. PlaneB1, PlaneA1_d and PlaneB1_d are adapted to receive second group of flows from all the input line cards (for example, from 64 input line cards) and to switch the received flows; selecting means are adapted to select the switched flows from the switching planes, thus achieving the cross-connections between signals of any input port of any input line card and signals of any output port of the output line card. Moreover, the overall switching system, which includes the input line cards, the plurality of fabric switches and the output line cards, is equivalent to one switching function, thus there are no limitations of the cross-connections between the inputs and the outputs (for example, multicast can be performed).

Similar considerations apply to other output line cards (not shown in the drawings), that is it's possible to perform the cross-connections between signals of any input port of any input line card and signals of any output port of any output line card.

Preferably, the switching planes PlaneA1, PlaneB1, PlaneA1_d, PlaneB1_d are implemented through one matrix board and the Controller is implemented over this matrix board, such that the Controller (indicated with "central" Controller) generates centrally the control information for the selecting means of a plurality of output line cards.

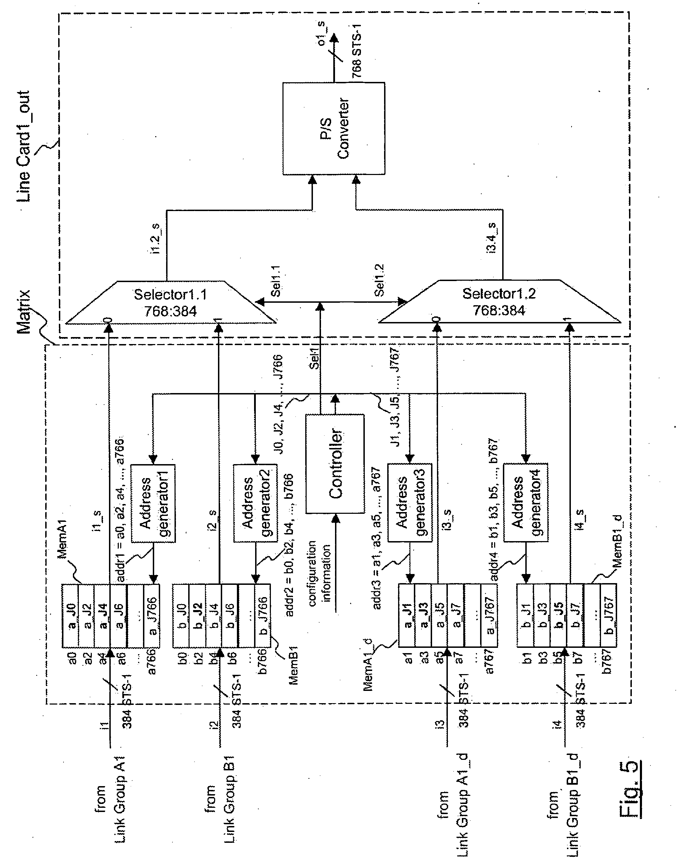

Referring to Fig.5, it shows more in detail the method for performing the selection in the selecting means (Selector1) of the first embodiment of Fig.1. The fabric switches indicated in Fig.1 with M1, M2, M3, M4 are implemented through memories indicated in Fig.5 with MemA1, MemB1, MemA1_d and MemB1_d respectively. Therefore the matrix board includes memory MemA1 for storing the flows of Link Group A1, MemB1 for storing the flows of Link Group B1, MemA1_d for storing the flows of Link Group A1__d and MemB1_d for storing the flows of Link Group B1_d. The matrix board further includes four address generators (indicated with "Address generator1 ", "Address generator2"; "Address generator3" and "Address generator4") generating the addresses values for reading data from MemA1, MemB1, MemA1_d and MemB1_d respectively.

It is supposed that each memory is storing (at a fixed time unit) one byte of each flow, thus each memory is storing one data byte of 384 flows and 384 addresses values are required for accessing the memories. Referring to Fig.5, MemA1 is storing data a_J0 at address a0, data a_J2 at address a2, .... data a_J766 at address a766. MemB1 is storing data b_J0 at address b0, data b_J2 at address b2, .. data b_J766 at address b766. MemA1_d is storing data a_J1 at address a1, data a_J3 at address a3, ... data a_J757 at address a767. MemB1_d is storing data b_J1 at address b1, data b_J3 at address b3, ... data b_J767 at address b767.

The selecting means (Selector1) incudes a first selector (indicated with "Selector1.1") for selecting data read from memory MemA1 or from memory MemB1, includes a second selector (indicated with "Sefector1.2") for selecting data read from memory MemA1_d or from memory MemB1_d and includes a converter from parallel to serial (indicated with "P/S Converter") for receiving data from the outputs i1.2_s, i3.4_s of the two selectors and for generating therefrom a serial data stream over o1_s. The first selector Selector1.1 further includes one control input (indicated with "Sel1.1") which is driven by the Controller and the second selector Seleetor1.2 further includes one control input (indicated with "Sel1.2") which is driven by the Controller. Moreover, the Controller generates a sequence of addresses indicated with J0, J1, J2, .. J767 having length equal to the number of the STS-1 output flows (768) carried over o1_s, wherein address J0 corresponds to STS-1 output flow #0, address J1 corresponds to STS-1 output flow #1, ... address J767 corresponds to STS-1 output flow #767.

More specifically, 768 STS-1 output flows carried over o1_s are selected from the 1536 flows carried over i1_s, i2_s, i3_s; i4_s, according to the following rule. Suppose to assign to the 768 STS-1 output flows a number from 0 to 767: output flows having an even number (0, 2, 4, .., 766) are read from MemA1 or MemB1, while output flows having an odd number (1, 3, 5, ..., 767) are read from MemA1_d or MemB1_d. Referring to Fig.5, Controlled generates an address sequence indicated with J0, J1, J2, ... J767, corresponding to the output flows from 0 to 768, wherein the addresses having an even number (J0 J2, J4, ..., J766) are transmitted to the input of Address generator1 and to the input of Address generator2, while the addresses having an odd number (J1, J31 J5, ..., J767) are transmitted to the input of Address generator3 and to the input of Address generator4.

Address generator1 receivers as input the address sequence J0, J2, J4, ... J766 and generates as output the address sequence a0, a2, a4, ..., a766 respectively, wherein and, a2, a4, ..., a766 are the addresses of MemA1 storing the data received from Link Group A1.

Address generator2. receives as input the address sequence J0, J2, J4, ... J766 and generates as output the address sequence b0, b2, b4, ..., b766 respectively, wherein b0, b2, b4, ..., b766 are the addresses of MemB1 storing the data received from Link Group B1.

Address generator3 receives as input the address sequence J1, J3, J5, ... J767 and generates as output the address sequence a1, a3, a5, ..., a761 respectively, wherein a1, a3, a5, ..., a767 are the addresses of MemA1_d storing the data received from Link Group A1_d.

Address generator4 receives as input the address sequence J1, J3, J5, ... J767 and generates as output the address sequence b0, b2, b4, ..., b766 respectively, wherein b0, b2, b4, ..., b767 are the addresses of MemB1_d storing the data received from Link Group B1_d.

The Controller receives configuration information indicating the cross-connections to be performed between the 768 STS-1 input flows generated from the input ports P1_in, P2_in, P3_in, P4_in and the 768 STS-1 output flows transmitted from the output ports P1_out, P2_out, P3_out, P4_out and generates therefrom an output Sel1 including 2 bits, wherein one bit is used for driving the control input Sel1.1 in order to select data from MemA1 when Sel1.1= '0' and from MemB1 when Sel1.1= '1', and wherein the other bit is used for driving the control input Sel1.2 in order to select data from MemA1_d when Sel1.2= '0' and from MemB1_d when Sel1.2= '1'.

For example, suppose that the STS-1 input flows are cross-connected to the STS-1 output flows such that STS-1 output flow #1 carries data a_J0 stored into MemA1, STS-1 output flow #2 carries data a_J1 stored into MemA1_d. STS-1 output flow #3 carries data b_J2 stored into MemB1, STS-1 output flow #4 carries data a_J3 stored into MemA1_d, STS-1 output flow #5 carries data a_J4 stored into MemA1, STS-1 output flow #6 carries b_J5 stored into MemB1_d, .... This can also be indicated with the following output serial data sequence carried over the output o1_s: a_J0, a_J1, b_J2, a_J3. a_J4, b_J5, ... (this data is indicated with a bold font in the memories of Fig.5)

In order to generate the above output data sequence, the Controller and the Address generator1 , 2, 3, 4 generate the following values for the control inputs Sel1.1 and Sel1.2;
- if addr = J0 -> Sel1.1=0;
- if addr = J1 -> Se/1.2=0;
- if addr = J2 -> Sel1.1=1;
- if addr =J3 -> Sel1.2=0;
- if addr= J4 -> Sel1.1.=0;
- if addr = J5 -> Sel1.2=1.

According to the above values of Sel1.1 and Sel1.2, the output i1.2_s of the first selector (elector1.1) carries the data sequence a_J0, b_J2, a_J4,... and the output i3.4_s of the second selector (elector1.2) carries the data sequence a_J1, a_J3, b_J5, ...., In order to generate the correct output data sequence, the output of the first and second selector is connected to the two inputs of a parallel to serial converter, which reads alternatevely the data from the two inputs and transmits the data read from the inputs to the output o1_s.

The above method for performing the selection can be extended to the switching between a plurality of input ports and a plurality of output ports, wherein the ports can carry a plurality of signals. Referring to Fig.4, it shows the switching between two input line cards (8 input ports) and one output line card (4 output ports). The memory MemA1 further stores the flows of Link Group A1 of Line Card1.1_in. MemB1 further stores the flows of Link Group B1 of Line Card1.1_in, MemA1_d further stores the flows of Link Group B1 of Line Card1.1_in and MemB1_d further stores the flows of Link Group B1_d of Line Card1.1_in: Address generator1 further receives an information for identifying the input line card, in order to generate to the output the address sequence addr1 including the values for reading the stored data received from Link Group A1 of Line Card1_in or from Link Group A1 of Line Card1.1_in. Address generator2 further receives the information for identifying the input line card, in order to generate to the output the address sequence addr2 including the values for reading the stored data received from Link Group B1 of Line Card1_in or from Link Group B1 of Line Card1.1_in. Address generator3 further receives the information for identifying the input line card, in order to generate to the output the address sequence addr3 including the values for reading the stored data received from Link Group A1_d of Line Card1_in or from Link Group A1_d of Line Card1.1_in. Address generator4 further receives the information for identifying the input line card, in order to generate to the output the address sequence addr4 including the values for reading the stored data received from Link Group B1_d of Line Card1_in or from Link Group B1_d of Line Card1.1_in.

More in general, the matrix board includes a plurality of memories storing the data of the flows of the second groups and the rule for reading from the memories depends on the arrangement of the input flows into the first groups. In fact according to the first embodiment, the input flows are arranged into two first groups and thus the address sequence J0, J1, .... is divided into two groups, the first one including the even numbers (J0, J2, J4, .., J766) and the second one including the odd numbers (J1, J3, J5, ..., J767). This division between even and odd number is only a preferred solution and other solutions are possible. For example, the first group of the addresses sequence can include the numbers J0, J1, J4, J5, J8, J9 and the second group the numbers J2, J3, J6, J7, J10, J11, ....

Referring to the second embodiment, the input flows are arranged into three first groups and thus the address sequence J0, J1, .... is divided into three groups. For example, the first group includes the numbers J0, J3, J6, ..., the second group includes the numbers J1, J4, J7, ...., the third group includes the numbers J2, J5, J8, ...

Therefore, according to the above method for performing the selection in the first embodiment, the control information is distributed by the central Controller only to the output line cards, while the input line cards are blind to this control information.

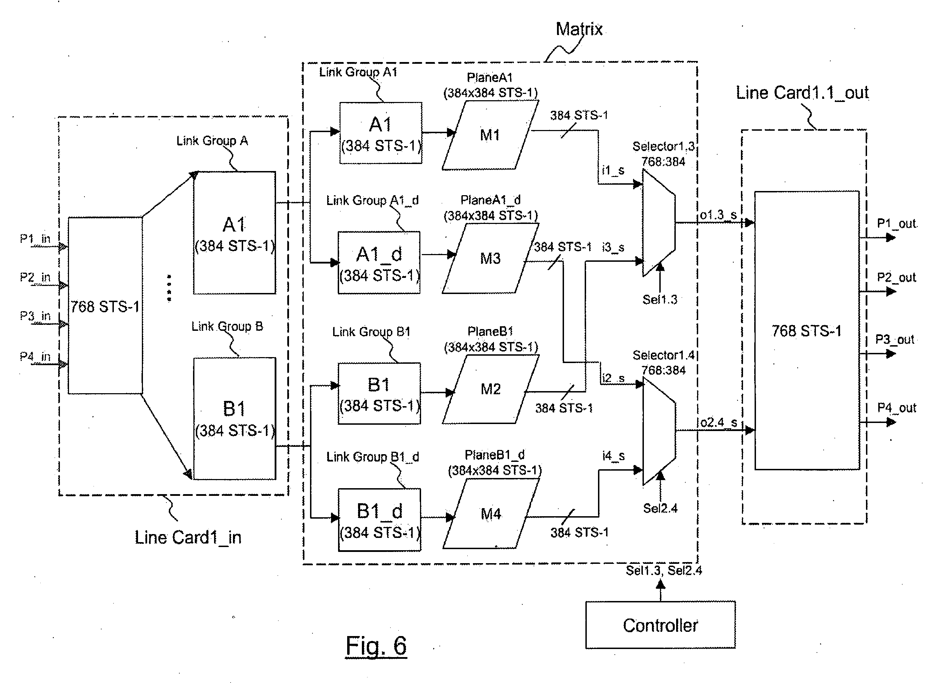

According to the first, second, third and fourth embodiments, the duplication of the first groups into corresponding copies is performed in the input line card (preferably, at the transmission side) and the selection of the switched flows is performed in the output line card (preferably, at the reception side), but other solutions are possible, like explained for the fifth embodiment. Referring to Fig.6, it shows a network element according to a fifth embodiment of the invention, which is a modification of the first, second, third and fourth embodiments. According to the fifth embodiment, the duplication of the first groups into corresponding copies is performed in the matrix board (preferably, at the reception side) and the selection of the switched flows is performed in the matrix board (preferably, at the transmission side).

More specifically, the arrangement into the first and second group of flows is performed like in the first embodiment, that is the 768 STS-1 input flows are arranged into first groups A1 and B1 each one including 384 STS-1 flows, the first groups A1, B1 are duplicated into A1_d, B1__d respectively and the second groups includes A1, A1_d, B1, B1_d. Fig.6 shows that the duplication of A1 into A1_d is performed in the matrix board and that the duplication of B1 into B1_d is performed in the matrix board.

Fig.6 further shows that the selection of the switched flows is performed by a first selector (indicated with "Selector1.3") and by a second selector (indicated with "Selector1.4") which are placed in the matrix board: Selector1.3 receives the flows switched by PlaneA1 and PlaneB1, while Selector1.4 receives the flows switched by PlaneA1_d and PlaneB1_d.

The fifth embodiment has the advantage (respect to the first embodiment) to require less bandwidth (thus less links) between the input line card and the matrix board and between the matrix board and the output line card. In fact, the bandwidth required between the input line card (or the output line card) and the matrix board of the fifth embodiment is equivalent to the bandwidth of 768 STS-1, while the bandwidth required between the input line card (or the output line card) and the matrix board of the first embodiment is equivalent to the bandwidth of 1536 STS-1: therefore, in this example, the bandwidth required by the fifth embodiment is half of the bandwidth required by the first embodiment.

Preferably, the input flows carry digital signals according to Time Division Multiplexing,

Preferably, the input flows carry digital signals arranged into data packets; in this case, the configuration information received by the Controller is generated dynamically and depends on the content of one (or more) field carried in the data packets.

The method can be advantageously implemented on a network element of an optical telecommunications network, the network element including hardware devices like an Application Specific integrated Circuit (ASIC), a Field Programmable Gate Array (FPGA), an Electrically Programmable Logical Device (EPLD) or a microprocessor.

More specifically, the method for controlling the selection in the selecting means of the first, second, third, fourth and fifth embodiments is implemented through a software program like Very high speed integrated circuit Hardware Description Language (VHDL) or Verilog, wherein the software program is running on hardware devices in the network element like an ASIC, a FPGA or an EPLD; alternatively, the method is implemented through a software program like C language running on a microprocessor (external or embedded into an FPGA) in the network element.

Fig.1 shows an input line card ("Line Card1_in") and another output line card ("Line Card1_out"). Preferably, an input/output line card includes the input line card and the output line card. Similar considerations apply to Fig.2, 3,4 and 6.

## Claims

1. Method for switching digital signals, including the steps of:
- generating multiple input flows from multiple inputs, the number of the multiple input flows being higher than the number of the multiple inputs;
- arranging the multiple input flows into first multiple groups (A1, B1) of flows taking into account the switching, capacity of at least two fabric switches, the number of flows switched by each of the at least two fabric switches being smaller than the number of the multiple input flows;
- duplicating the first multiple groups of flows into at least one corresponding copy (A1_d, B1_d);
- arranging the first multiple groups and the at least one corresponding copy into second, multiple groups (Link Group A1, Link Group B1, Link Group A1_d, Link Group B1_d) of flows;
- switching flows of the second multiple groups into the at least two fabric switches;
- selecting multiple output flows (o1_s) from at least part of the switched flows of the second multiple groups.

2. Method according to claim 1 wherein the first multiple groups (A1, B1) and the copies (A1_d, B1_d) are arranged into different second multiple groups (Link Group A1, Link Group B1, Link Group A1_d, Link Group B1_d).

3. Method according to any of the previous claims, wherein the arrangement into the second multiple groups is such that at least one second group (Link Group A2_C2_d) includes a group (A2) out of the first multiple groups and the copy (C2_d) of another group (C2) out of the first multiple groups.

4. Method according to claim 1, further including the steps of:
- dividing at least one of the second groups of flows into third multiple groups (A3.1, A3.2, A3.3) of flows;
- slicing the flows of the third groups over the at least two fabric switches.

5. Method according to any of the previous claims, wherein the at least two fabric switches are arranged into multiple switching planes and wherein the switching of the second multiple groups is performed into different switching planes.

6. Method according to any of the previous claims, wherein the multiple inputs are multiple input ports and one group out of the first multiple groups includes the input flows generated from different input ports.

7. Method according to claim 5 or 6, wherein one of the multiple switching planes includes a plurality of fabric switches, the method further including the step of slicing the flows of a group out of the second multiple groups, wherein the step of switching the flows of the group includes the switching of the sliced flows over the plurality of fabric switches.

8. Method according to any of the previous claims, wherein the multiple inputs are multiple input ports and wherein a first input line card is adapted to receive the first multiple input ports, a matrix board includes the at least two fabric switches and an output line card is adapted to generate the multiple output ports.

9. Method according to claim 8, wherein the step of duplicating is performed at the transmission side the first input line card.

10. Method according to clam 9, wherein the step of selecting is performed at the reception side of the output line card.

11. Method according to 8, wherein the step of duplicating is performed at the reception side of the matrix board and the step of selecting is performed at the transmission side of the matrix board.

12. Method according to any of claims 8 to 11, wherein the step of arranging the multiple input flows further takes into account the capacity of links between the input line card and the matrix board.

13. Method according to any of claims 8 to 12, the method further including the steps of:
- generating in the matrix board control information, from configuration information indicating the cross-connections between the multiple input flows and the multiple output flows;
- transmitting the control information from the matrix board to the output line card;
- receiving the control information at the output line card and performing therefrom the selection of the multiple output flows.

14. Method according to any of the previous claims, further including the steps of:
- generating other multiple input flows from other multiple inputs, the number of the other multiple input flows being higher than the number of the other multiple inputs;
- arranging the other multiples input flows into other first multiple groups (A1.1, B1.1) of flows taking into account the switching capacity of the at least two fabric switches;
- duplicating the other first.multiple groups of flows into at least one other corresponding copy (A1.1_d, B1.1_d);
- arranging the other first multiple groups and the at least one other corresponding copy into other second multiple groups;
- switching flows of the other second multiple groups into the at least two fabric switches;
- selecting the multiple output flows from the at least part of the switched flows of the second multiple groups and from at least part of switched, flows of the other second multiple groups.

15. Device adapted to access at least two fabric switches for switching digital signals, the device including:
- first means for:
• generating multiple input flows from multiple inputs, the number of the multiple input flows being higher than the number of the multiple inputs;
• arranging the multiple input flows into first multiple groups (A1, B1) of flows taking into account the switching capacity of at least two fabric switches, the number of flows switched by each of the at least two fabric switches being smaller than the number of the multiple input flows;
• duplicating the first multiple groups of flows into at least one corresponding copy (A1_d, B1_d);
• arranging the first multiple groups and the at least one corresponding copy into second multiple groups (Link Group A1, Link Group B1, Link Group A1_d, Link Group B1_d) of flows to be switched by the at least two fabric switches;
- second means (Selector1) for selecting multiple output flows from flows switched by the at least two fabric switches.

16. Device according to claim 15, wherein the multiple inputs are multiple input ports and wherein a first input line card (Line Card1_in) is adapted to receive the first multiple input ports.

17. System for switching digital signals, the system including a device according to claim 15 or 16 and including the at least two fabric switches.

18. System according to claims 17, the system including a matrix board comprising the at least two fabric switches, wherein the first means is further adapted to take into account the capacity of links between the input line card and the matrix board.

19. System according to claim 17, the system including controlling means adapted to receive configuration information indicating the cross-connections between the multiple, input flows and the multiple output flows and to generate therefrom information for controlling the selecting means.

20. Network element including a system according to any of claims 17 to 19.

21. Telecommunication network including at least one network element according to claim 20.

22. Computer program comprising computer program code means adapted to perform the steps of the method according to claim 13 when said computer program is run on hardware of a network element.

## Patentansprüche

1. Verfahren für die Vermittlung von Digitalsignalen, die folgenden Schritte umfassend:
- Erzeugen von mehrfachen Eingangsflüssen von mehrfachen Eingängen, wobei die Anzahl der mehrfachen Eingangsflüsse höher ist als die Anzahl der mehrfachen Eingänge;
- Einteilen der mehrfachen Eingangsflüsse in mehrfache erste Gruppen (A1, B1) von Flüssen unter Berücksichtigung der Vermittlungskapazität von mindestens zwei Koppelfeldern, wobei die Anzahl der von einem jeden der mindestens zwei Koppelfelder vermittelten Flüsse niedriger ist als die Anzahl der mehrfachen Eingangsflüsse;
- Duplizieren der mehrfachen ersten Gruppen von Flüssen in mindestens eine entsprechende Kopie (A1_d, B1_d),
- Einteilen der mehrfachen ersten Gruppen und der mindestens einen entsprechenden Kopie in mehrfache zweite Gruppen (Link Group A1, Link Group B1 , Link Group A1_d, Link Group B1_d) von Flüssen;
- Vermitteln der Flüsse der mehrfachen zweiten Gruppen an die mindestens zwei Koppelfelder;
- Auswählen von mehrfachen Ausgangsflüssen (o1_s) aus mindestens einem Teil der vermittelten Flüsse der mehrfachen zweiten Gruppen.

2. Verfahren nach Anspruch 1, wobei die mehrfachen ersten Gruppen (A1, B1) und die Kopien (A1_d, B1_d) in verschiedene mehrfache zweite Gruppen (Link Group A1, Link Group B1, Link Group A1_d, Link Group B1_d) eingeteilt werden.

3. Verfahren nach einem beliebigen der vorstehenden Ansprüche, wobei das Einteilen in die mehrfachen zweiten Gruppen derart erfolgt, dass zumindest eine zweite Gruppe (Link Group A2_C2_d) eine Gruppe (A2) aus den mehrfachen ersten Gruppen sowie die Kopie (C2_d) einer anderen Gruppe (C2) aus den mehrfachen ersten Gruppen umfasst.

4. Verfahren nach Anspruch 1, weiterhin die folgenden Schritte umfassend:
- Aufteilen mindestens einer der zweiten Gruppen von Flüssen in mehrfache dritte Gruppen (A3.1, A3.2, A3.3) von Flüssen;
- Zerlegen der Flüsse der dritten Gruppen über die mindestens zwei Koppelfelder.

5. Verfahren nach einem beliebigen der vorstehenden Ansprüche, wobei die mindestens zwei Koppelfelder in mehrfache Vermittlungsebenen eingeteilt sind, und wobei das Vermitteln der mehrfachen zweiten Gruppen an verschiedene Vermittlungsebenen erfolgt.

6. Verfahren nach einem beliebigen der vorstehenden Ansprüche, wobei die mehrfachen Eingänge mehrfache Eingangsports sind und eine Gruppe der mehrfachen ersten Gruppen die von verschiedenen Eingangsports erzeugten Eingangsflüsse umfasst.

7. Verfahren nach Anspruch 5 oder 6, wobei eine der mehrfachen Vermittlungsebenen eine Vielzahl von Koppelfeldern umfasst, wobei das Verfahren weiterhin den Schritt des Zerlegens der Flüsse einer Gruppe der mehrfachen zweiten Gruppen umfasst, wobei der Schritt des Vermittelns der Flüsse der Gruppe das Vermitteln der zerlegten Flüsse über die Vielzahl von Koppelfeldern umfasst.

8. Verfahren nach einem beliebigen der vorstehenden Ansprüche, wobei die mehrfachen Eingänge mehrfache Eingangsports sind, und wobei eine erste Eingangs-Line-Card dazu ausgelegt ist, die mehrfachen ersten Eingangsports aufzunehmen, wobei eine Matrixleiterplatte die mindestens zwei Koppelfelder enthält, und wobei eine Ausgangs-Line-Card dazu ausgelegt ist, die mehrfachen Ausgangsports zu erzeugen.

9. Verfahren nach Anspruch 8, wobei der Schritt des Duplizierens an der Übertragungsseite der ersten Eingangs-Line-Card ausgeführt wird.

10. Verfahren nach Anspruch 9, wobei der Schritt des Auswählens an der Empfangsseite der Ausgangs-Line-Card ausgeführt wird.

11. Verfahren nach Anspruch 8, wobei der Schritt des Duplizierens an der Empfangsseite der Matrixleiterplatte und der Schritt des Auswählens an der Übertragungsseite der Matrixleiterplatte ausgeführt werden.

12. Verfahren nach einem beliebigen der Ansprüche 8 bis 11, wobei der Schritt des Einteilens der mehrfachen Eingangsflüsse weiterhin die Kapazität der Links zwischen der Eingangs-Line-Card und der Matrixleiterplatte berücksichtigt.

13. Verfahren nach einem beliebigen der Ansprüche 8 bis 12, wobei das Verfahren weiterhin die folgenden Schritte umfasst:
- Erzeugen, in der Matrixleiterplatte, von Steuerdaten aus den Konfigurationsdaten, welche die Kreuzverbindungen zwischen den mehrfachen Eingangsflüssen und den mehrfachen Ausgangsflüssen anzeigen;
- Übertragen der Steuerdaten von der Matrixleiterplatte an die Ausgangs-Line-Card;
- Empfangen der Steuerdaten an der Ausgangs-Line-Card, und Ausführen der Wahl der mehrfachen Ausgangsflüsse daraus.

14. Verfahren nach einem beliebigen der vorstehenden Ansprüche, weiterhin die folgenden Schritte umfassend:
- Erzeugen von weiteren mehrfachen Eingangsflüssen von weiteren mehrfachen Eingängen, wobei die Anzahl der weiteren mehrfachen Eingangsflüsse höher ist als die Anzahl der weiteren mehrfachen Eingänge;
- Einteilen der weiteren mehrfachen Eingangsflüsse in weitere mehrfache erste Gruppen (A1.1, B1,1) von Flüssen unter Berücksichtigung der Vermittlungskapazität der mindestens zwei Koppelfelder;
- Duplizieren der weiteren mehrfachen ersten Gruppen von Flüssen in mindestens eine weitere entsprechende Kopie (A1.1_d, B1.1_d);
- Einteilen der weiteren mehrfachen ersten Gruppen und der mindestens einen weiteren entsprechenden Kopie in weitere mehrfache zweite Gruppen;
- Vermitteln der Flüsse der weiteren mehrfachen zweiten Gruppen an die mindestens zwei Koppelfelder;
- Auswählen der mehrfachen Ausgangsflüsse aus mindestens dem Teil der vermittelten Flüsse der mehrfachen zweiten Gruppen und aus mindestens einem Teil von vermittelten Flüssen der weiteren mehrfachen zweiten Gruppen.

15. Vorrichtung, dazu ausgelegt, auf mindestens zwei Koppelfelder zuzugreifen, um digitale Signale zu vermitteln, wobei die Vorrichtung umfasst:
- Erste Mittel zum:
• Erzeugen von mehrfachen Eingangsflüssen von mehrfachen Eingängen, wobei die Anzahl der mehrfachen Eingangsflüsse höher ist als die Anzahl der mehrfachen Eingänge;
• Einteilen der mehrfachen Eingangsflüsse in mehrfache erste Gruppen (A1, B1) von Flüssen unter Berücksichtigung der Vermittlungskapazität von mindestens zwei Koppelfeldern; wobei die Anzahl der von einem jeden der mindestens zwei Koppelfelder vermittelten Flüsse niedriger ist als die Anzahl der mehrfachen Eingangsflüsse;
• Duplizieren der mehrfachen ersten Gruppen von Flüssen in mindestens eine entsprechende Kopie (A1_d, B1_d);
• Einteilen der mehrfachen ersten Gruppen und der mindestens einen entsprechenden Kopie in mehrfache zweite Gruppen (Link Group A1, Link Group B1, Link Group A1_d, Link Group B1_d) von von den mindestens zwei Koppelfeldern zu vermittelnden Flüssen;
- zweite Mittel (Selector1) zum Auswählen von mehrfachen Ausgangsflüssen aus von den mindestens zwei Koppelfeldern vermittelten Flüssen.

16. Vorrichtung nach Anspruch 15, wobei die mehrfachen Eingänge mehrfache Eingangsports sind, und wobei eine erste Eingangs-Line-Card (Line Card1_in) für die Aufnahme der mehrfachen ersten Eingangsports ausgelegt ist.

17. System zur Vermittlung von digitalen Signalen, wobei das System eine Vorrichtung nach Anspruch 15 oder 16 sowie die mindestens zwei Koppelfelder umfasst.

18. System nach Anspruch 17, wobei das System eine Matrixleiterplatte mit den mindestens zwei Koppelfeldern umfasst, wobei das erste Mittel weiterhin für die Berücksichtigung der Kapazität der Links zwischen der Eingangs-Line-Card und der Matrixleiterplatte ausgelegt ist.

19. System nach Anspruch 17, wobei das System Steuermittel umfasst, die für den Empfang von Konfigurationsdaten, welche die Kreuzverbindungen zwischen den mehrfachen Eingangsflüssen und den mehrfachen Ausgangsflüssen anzeigen, sowie für das Erzeugen von Informationen zum Steuern der Auswahlmittel ausgelegt sind.

20. Netzwerkelement mit einem System nach einem beliebigen der Ansprüche 17 bis 19.

21. Telekommunikationsnetzwerk mit mindestens einem Netzwerkelement nach Anspruch 20.

22. Computerprogramm mit Computerprogrammecode-Mitteln, welche für das Ausführen der Schritte des Verfahrens nach Anspruch 13 ausgelegt sind, wenn das besagte Computerprogramm auf einer Hardware eines Netzwerkelements läuft.

## Revendications

1. Procédé de commutation de signaux numériques, comprenant les étapes suivantes :
- génération de multiples flux d'entrée de multiples entrées, le nombre de multiples flux d'entrée étant supérieur au nombre de multiples entrées ;
- agencement des multiples flux d'entrée en premiers groupes multiples (A1, B1) de flux prenant en compte la capacité de commutation d'au moins deux matrices de commutation, le nombre de flux commutés par chacune des au moins deux matrices de commutation étant inférieur au nombre de multiples flux d'entrée ;
- duplication des premiers groupes multiples de flux en au moins une copie correspondante (A1_d, B1_d) ;
- agencement des premiers groupes multiples et de la au moins une copie correspondante en de deuxièmes groupes multiples (Link Group A1, Link Group B1, Link Group A1_d, Link Group B1_d) de flux ;
- commutation des flux des deuxièmes groupes multiples sur les au moins deux matrices de commutation ;
- sélection de multiples flux de sortie (01_s) parmi au moins une partie des flux commutés des deuxièmes groupes multiples.

2. Procédé selon la revendication 1, dans lequel les premiers groupes multiples (A1, B1) et les copies (A1_d, B1_d) sont agencés dans des deuxièmes groupes multiples différents (Link Group A1, Link Group B1, Link Group A1_d, Link Group B1_d),

3. Procédé selon l'une quelconque des revendications précédentes, dans lequel l'agencement en deuxièmes groupes multiples est tel qu'au moins un deuxième groupe (Groupe de liaison A2_C2_d) comprend un groupe (A2) parmi les premiers groupes multiples et la copie (C2_d) d'un autre groupe (C2) parmi les premiers groupes multiples.

4. Procédé selon la revendication 1, comprenant en outre les étapes suivantes :
- division d'au moins l'un des deuxièmes groupes de flux en troisièmes groupes multiples (A3.1, A3.2, A3.3) de flux ;
- découpage des flux des troisièmes groupes sur les au moins deux matrices de commutation.

5. Procédé selon l'une quelconque des revendications précédentes, dans lequel les au moins deux matrices de commutation sont agencées en multiples plans de commutation et dans lequel la commutation des deuxièmes groupes multiples est exécutée dans des plans de commutation différents.

6. Procédé selon l'une quelconque des revendications précédentes, dans lequel les multiples entrées sont de multiples ports d'entrée et dans lequel un groupe parmi les premiers groupes multiples comprend les flux d'entrée générés depuis différents ports d'entrée.

7. Procédé selon la revendication 5 ou 6, dans lequel l'un des multiples plans de commutation comprend une pluralité de matrices de commutation, le procédé comprenant en outre l'étape de découpage des flux d'un groupe parmi les deuxièmes groupes multiples, dans lequel l'étape de commutation des flux du groupe comprend la commutation des flux découpés sur la pluralité de matrices de commutation.

8. Procédé selon l'une quelconque des revendications précédentes, dans lequel les multiples entrées sont de multiples ports d'entrée et dans lequel une première carte de lignes d'entrée est adaptée pour recevoir les premiers multiples ports d'entrée, une carte matrice comprenant au moins deux matrices de commutation et une carte de lignes de sortie étant adaptée pour générer les multiples ports de sortie.

9. Procédé selon la revendication 8, dans lequel l'étape de duplication est exécutée sur le côté d'émission de la première carte de lignes d'entrée.

10. Procédé selon la revendication 9, dans lequel l'étape de sélection est exécutée sur le côté de réception de la première carte de lignes de sortie.

11. Procédé selon la revendication 8, dans lequel l'étape de duplication est exécutée sur le côté de réception de la carte matrice et l'étape de sélection est exécutée sur le côté d'émission de la carte matrice.

12. Procédé selon l'une quelconque des revendications 8 à 11, dans lequel l'étape d'agencement des multiples flux d'entrée prend en outre en compte la capacité des liaisons entre la carte de lignes d'entrée et la carte matrice.

13. Procédé selon l'une quelconque des revendications 8 à 12, le procédé comprenant en outre les étapes suivantes :
- génération dans la carte matrice d'informations de commande à partir des informations de configuration, indiquant les interconnexions entre les multiples flux d'entrée et les multiples flux de sortie ;
- transmission des informations de commande de la carte matrice à la carte de lignes de sortie ;
- réception des informations de commande sur la carte de lignes de sortie et exécution sur celle-ci de la sélection des multiples flux de sortie.

14. Procédé selon l'une quelconque des revendications précédentes, comprenant en outre les étapes suivantes :
- génération d'autres multiples flux d'entrée d'autres multiples entrées, le nombre des autres multiples flux d'entrée étant supérieur au nombre des autres multiples entrées ;
- agencement des autres multiples flux d'entrée en d'autres premiers groupes multiples (A1,1, B1.1) de flux prenant en compte la capacité de commutation des au moins deux matrices de commutation ;
- duplication des autres premiers groupes multiples de flux en au moins une autre copie correspondante (A1,1_d, B1.1_d) ;
- agencement des autres premiers groupes multiples et de la au moins une autre copie correspondante dans d'autres deuxièmes groupes multiples ;
- commutation des flux des autres deuxièmes groupes multiples sur les au moins deux matrices de commutation ;
- sélection de multiples flux de sortie parmi la au moins une partie des flux commutés des deuxièmes groupes multiples et parmi au moins une partie des flux commutés des autres deuxièmes groupes multiples.

15. Dispositif adapté pour accéder à au moins deux matrices de commutation pour commuter des signaux numériques, le dispositif comprenant :
- premiers moyens pour :
• générer de multiples flux d'entrée de multiples entrées, le nombre de multiples flux d'entrée étant supérieur au nombre de multiples entrées ;
• agencer les multiples flux d'entrée en premiers groupes multiples (A1, B1) de flux prenant en compte la capacité de commutation d'au moins deux matrices de commutation, le nombre de flux commutés par chacune des au moins deux matrices de commutation étant inférieur au nombre de multiples flux d'entrée ;
• dupliquer les premiers groupes multiples de flux en au moins une copie correspondante (A1_d, B1_d) ;
• agencer les premiers groupes multiples et la au moins une copie correspondante en de deuxièmes groupes multiples (Link Group A1, Link Group B1, Link Group A1_d, Link Group B1_d) de flux à commuter par les au moins deux matrices de commutation ;
- deuxièmes moyens (Selecteur1) pour sélectionner de multiples flux de sortie parmi les flux commutés par les au moins deux matrices de commutation.

16. Dispositif selon la revendication 15, dans lequel les multiples entrées sont de multiples ports d'entrée et dans lequel une première carte de lignes d'entrée (Line Card1_in) est adaptée pour recevoir les premiers multiples ports d'entrée.

17. Système de commutation de signaux numériques, le système comprenant un dispositif selon la revendication 15 ou16 et comprenant les au moins deux matrices de commutation.

18. Système selon la revendication 17, le système comprenant une carte matrice comprenant les au moins deux matrices de commutation, dans lequel les premiers moyens sont en outre adaptés pour prendre en compte la capacité des liaisons entre la carte de lignes d'entrée et la carte matrice.

19. Système selon la revendication 17, le système comprenant des moyens de commande adaptés pour recevoir des informations de configuration indiquant les interconnexions entre les multiples flux d'entrée et les multiples flux de sortie et pour générer à partir de celles-ci des informations de commande des moyens de sélection.

20. Élément de réseau comprenant un système selon l'une quelconque des revendications 17 à 19.

21. Réseau de télécommunications comprenant au moins un élément de réseau selon la revendication 20.

22. Programme informatique comprenant des moyens de programmation informatique adaptés pour exécuter les étapes du procédé selon la revendication 13 quand ledit programme informatique est exécuté sur le matériel d'un élément de réseau.
